(19) **Europäisches Patentamt**
**European Patent Office**
**Office européen des brevets**

(11) Veröffentlichungsnummer: **0 284 949 B1**

(12) # EUROPÄISCHE PATENTSCHRIFT

(45) Veröffentlichungstag der Patentschrift: 04.09.91    (51) Int. Cl.⁵: **D06F 33/02**

(21) Anmeldenummer: **88104528.0**

(22) Anmeldetag: **22.03.88**

(54) Waschmaschine mit einem drehzahlgesteuerten Antriebsmotor.

(30) Priorität: **01.04.87 DE 3710834**

(43) Veröffentlichungstag der Anmeldung:
**05.10.88 Patentblatt 88/40**

(45) Bekanntmachung des Hinweises auf die
Patenterteilung:
**04.09.91 Patentblatt 91/36**

(84) Benannte Vertragsstaaten:
**AT CH DE FR GB IT LI SE**

(56) Entgegenhaltungen:
**DE-A- 3 436 786**
**FR-A- 2 283 977**
**FR-A- 2 548 699**

(73) Patentinhaber: **Bosch-Siemens Hausgeräte
GmbH
Hochstrasse 17
W-8000 München 80(DE)**

(72) Erfinder: **Uszkureit, Detlef
Schottmüller Strasse 14
W-1000 Berlin 37(DE)**
Erfinder: **Brodzina, Lieselotte
Gieselerstrasse 21
W-1000 Berlin 31(DE)**
Erfinder: **Mahlow, Dieter, Dipl.-Ing.
Bornstedterstrasse 10
W-1000 Berlin 31(DE)**

**Beschreibung**

Die Erfindung bezieht sich auf eine Waschmaschine mit einem drehzahlgesteuerten Antriebsmotor für die mit Wasch- und Schleuderdrehzahlen antriebbare Wäschetrommel und mit einem Speicherelement zum Abspeichern der Drehzahl-Referenzwerte für die Drehzahlsteuereinrichtung sowie mit den Betriebsphasen "Waschbetrieb" und "Spülbetrieb".

Bekannte Waschmaschinen dieser Art wenden für den Waschbetrieb normalerweise eine Trommeldrehzahl von beispielsweise 50 Upm an. Eine bekannte Waschmaschine (DE-OS 33 24 481) dieser Art wendet für die mit Beginn des Frischwasserzulaufs einsetzende Benetzungsphase eine Trommeldrehzahl von beispielsweise 30 Upm an. Hierdurch soll die Benetzung der Wäsche mit dem frisch einlaufenden Wasser beschleunigt werden. Waschmaschinen dieser Art müssen einen Trommel-Antriebsmotor haben, dessen Drehzahl durch einfache elektrische Maßnahmen gesteuert und ggf. geregelt werden kann. Obwohl derartige Regeleinrichtungen bereits viele unterschiedliche Drehzahlen für den Antriebsmotor ermöglichen, wird diese Drehzahlvielfalt nicht genügend ausgenutzt. Beim Betrieb solcher Waschmaschinen hat sich aber bereits erkennbar gezeigt, daß in einigen Phasen des Waschbetriebs die Behandlung der Wäsche nicht optimal ist.

Der Erfindung liegt die Aufgabe zugrunde, die Wäschebehandlung in Waschmaschinen der eingangs genannten Art zu verbessern.

Erfindungsgemäß wird diese Aufgabe dadurch gelöst, daß für den Waschbetrieb eine Matrix von Drehzahl-Referenzwerten abgespeichert ist, die für mindestens zwei unterschiedliche Wäschesorten je drei unterschiedliche Waschbetriebs-Drehzahlwerte enthalten. Hierdurch ist eine individuelle Anpassung der Wäschetrommel-Drehzahlen einerseits an die zu waschende Wäschesorte (Gewebeart) und andererseits an die einzelnen Phasen des Waschbetriebes möglich.

Insbesondere ist von Vorteil, wenn gemäß einer Weiterbildung der Erfindung einer der drei Drehzahlwerte für jede Wäschesorte als Benetzungs-Drehzahlwert während einer Benetzungsphase des Waschbetriebs vorgesehen ist. Es hat sich nämlich gezeigt, daß die Benetzungs-Drehzahlwerte für unterschiedliche Wäschesorten durchaus unterschiedliche optimale Werte annehmen können.

Ferner ist von besonderem Vorteil, wenn gemäß einer weiteren Fortbildung der Erfindung ein zweiter der drei Drehzahlwerte für jede Wäschesorte als Heizungs-Drehzahlwert während einer Aufheizphase des Waschbetriebs vorgesehen ist. Einer der wesentlichen neuen Erkenntnisse der vorliegenden Erfindung umfaßt nämlich die Anwendung eines besonderen Drehzahlwertes für die Aufheizphase.

Weiterhin ist es besonders vorteilhaft, gemäß einer weiteren Fortbildung der Erfindung einen dritten der drei Drehzahlwerte für jede Wäschesorte als Aktiv-Drehzahlwert während einer aktiven Waschphase des Waschbetriebs vorzusehen. Zwar ist es bekannt, während der aktiven Waschphase eine Trommel-Drehzahl von beispielsweise 50 Upm anzuwenden. Bei bekannten Waschmaschinen wird diese Trommel-Drehzahl jedoch für alle Wäschearten (mit Ausnahme für Wolle) angewendet, während es von Vorteil sein kann, wenn für unterschiedliche Wäschesorten auch unterschiedliche Trommel-Drehzahlen während der aktiven Waschphase angewendet werden.

Eine der vorteilhaften Weiterbildungen der Erfindung enthält einen Waschbetrieb für die Wäschesorte "Wolle", bei dem die Werte der Heizungs- und der Aktiv-Drehzahl gleich sind. Da die Trommel-Drehzahlen für die Wäschesorte "Wolle" wegen der erfoderlichen vorsichtigen mechanischen Behandlung der Wolle ohnehin bereits klein sind, scheint eine weitere Diversifikation der bei "Wolle" anzuwendenden Drehzahlen nicht erforderlich.

In einer vorteilhaften Weiterbildung der Erfindung sind die jeweils gleichartigen Drehzahlwerte für unterschiedliche Wäschesorten gleich. Sofern die optimalen Drehzahlwerte für die unterschiedlichen Wäschesorten nicht weit voneinander abweichen, können solche Drehzahlwerte zur Vereinfachung der Steuerung gleichgesetzt werden.

In einer anderen Fortbildung der Erfindung sind die jeweils gleichartigen Drehzahlwerte für unterschiedliche Wäschesorten ebenfalls unterschiedlich. Diese Unterscheidung wird man treffen, sofern die Werte der optimalen Drehzahlen genügend weit voneinander entfernt sind.

Eine besondere Fortbildung der Erfindung besteht darin, daß die Drehzahlwerte für die Wäschesorte "Wolle" sich von den jeweils gleichartigen Drehzahlwerten für die anderen Wäschesorten unterscheiden. Hierdurch ist eine besonders für Wolle geeignete Anpassung der jeweiligen Drehzahlen beim Benetzen, beim Aufheizen und beim aktiven Waschen möglich, falls eine solche Anpassung trotz der wenig voneinander abweichenden Werte für erforderlich gehalten wird.

Eine bedeutende Weiterentwicklung der Erfindung sieht vor, für den Spülbetrieb jeder Wäschesorte den Drehzahlwert der zugeordneten Aufheizphase zu benutzen. Es hat sich nämlich gezeigt, daß gerade beim Spülen eine von der Drehzahl beim aktiven Waschen nach unten abweichende Drehzahl von Vorteil ist. Die optimale Drehzahl beim Spülbetrieb ähnelt am meisten der jeweiligen optimalen Drehzahl beim Aufheizen.

Zur Erläuterung der Erfindung ist nachstehend eine Drehzahlmatrix tabellenförmig wiedergegeben. Darin sind als Beispiele für Wäschesorten "Baumwolle", "Pflegeleicht" und "Wolle" angegeben.

### Drehzahlmatrix

| Programm | Benetzen | Waschen Aufheizen | aktives Waschen | Spülen |
|---|---|---|---|---|
| Baumwolle | n B 1 | n B 2 | n B 3 | n B 2 |
| Pflegeleicht | n P 1 | n P 2 | n P 3 | n P 2 |
| Wolle | n W 1 | n W 2 | n W 2 | n W 2 |

Die Drehzahlwerte n in der Drehzahlmatrix verhalten sich innerhalb der nachstehenden Grenzen zueinander:

Die Drehzahlen nB1, nB2 und nB3 sind voneinander verschieden. Desgleichen unterscheiden sich jeweils alle Drehzahlwerte nP und alle Drehzahlwerte nW.

Die Drehzahlwerte nB1 und nP1 können entweder gleich oder verschieden voneinander sein. Das gleiche betrifft die Drehzahlwerte nB2 und nP2 sowie die Drehzahlwerte nB3 und nP3.

Der Drehzahlwert nW1 sollte unbedingt von den Drehzahlwerten nB1 und nP1 verschieden sein. Ebenso soll der Drehzahlwert nW2 verschieden von den Drehzahlwerten nB2 und nP2 sein.

Für eine Wäschetrommel mit einem Außendurchmesser von ca. 475 mm haben sich die Baumwolle-Drehzahlwerte wie folgt als besonders geeignet erwiesen: nB1 = 27 Upm, nB2 = 40 Upm und nB3 = 52 Upm. Entsprechend können die Drehzahlwerte nP1, nP2 und nP3 angepaßt sein, d.h. vorzugsweise etwas niedriger liegen als die entsprechenden Drehzahlwerte nB. Ähnlich verhält es sich mit den Drehzahlen nW1 und nW 2 im Verhältnis zu den vorgenannten Drehzahlen.

Anstelle der im Spülbetrieb vorgesehenen Drehzahl nB2 oder nP2 kann auch hierfür noch ein weiterer Drehzahlwert vorgesehen sein, wenn sich dafür ein besonderer Vorteil ergibt.

Außer den genannten Beispielen können noch weitere Wäschesorten (z.B. "Buntwäsche", "Gardinen" und "Oberbekleidung") besondere Drehzahlwerte in den Benetzungs-, Aufheiz- und aktiven Waschphasen zugeordnet sein.

**Patentansprüche**

1. Waschmaschine mit einem drehzahlgesteuerten Antriebsmotor für die mit Wasch- und Schleuderdrehzahlen antreibbare Wäschetrommel und mit einem Speicherelement zum Abspeichern der Drehzahl-Referenzwerte für die Drehzahl-Steuereinrichtung sowie mit den Betriebsphasen "Waschbetrieb" und "Spülbetrieb", **dadurch gekennzeichnet,** daß für den Waschbetrieb eine Matrix von Drehzahl-Referenzwerten abgespeichert ist, die für mindestens zwei unterschiedliche Wäschesorten (z.B. "Baumwolle" und "Pflegeleicht") je drei unterschiedliche Waschbetriebs-Drehzahlwerte (nB1, nB2, nB3 und nP1, nP2, nP3) enthalten.

2. Waschmaschine nach Anspruch 1, dadurch gekennzeichnet, daß einer (nB1 bzw. nP1) der drei Drehzahlwerte für jede Wäschesorte als Benetzungs-Drehzahlwert während einer Benetzungsphase des Waschbetriebs vorgesehen ist.

3. Waschmaschine nach Anspruch 1 oder 2, dadurch gekennzeichnet, daß ein zweiter (nB2 bzw. nP2) der drei Drehzahlwerte für jede Wäschesorte als Heizungs-Drehzahlwert während einer Aufheizphase des Waschbetriebs vorgesehen ist.

4. Waschmaschine nach einem der Ansprüche 1 bis 3, dadurch gekennzeichnet, daß ein dritter (nB3 bzw. nP3) der drei Drehzahlwerte für jede Wäschesorte als Aktiv-Drehzahlwert während einer aktiven Waschphase des Waschbetriebs vorgesehen ist.

EP 0 284 949 B1

5. Waschmaschine nach Anspruch 3 oder 4, dadurch gekennzeichnet, daß bei einem Waschbetrieb für die Wäschesorte "Wolle" die Werte der Heizungs- und der Aktiv-Drehzahl gleich sind.

6. Waschmaschine nach einem der vorstehenden Ansprüche, dadurch gekennzeichnet, daß die jeweils gleichartigen Drehzahlwerte für unterschiedliche Wäschesorten gleich sind.

7. Waschmaschine nach einem der Ansprüche 1 bis 5, dadurch gekennzeichnet, daß die jeweils gleichartigen Drehzahlwerte für unterschiedliche Wäschesorten sich unterscheiden.

8. Waschmaschine nach einem der Ansprüche 1 bis 6, dadurch gekennzeichnet, daß Drehzahlwerte für die Wäschesorte "Wolle" sich von den jeweils gleichartigen Drehzahlwerten für die anderen Wäschesorten unterscheiden.

9. Waschmaschine nach einem der vorstehenden Ansprüche, dadurch gekennzeichnet, daß für den Spülbetrieb jeder Wäschesorte der Drehzahlwert (nB2 bzw. nP2 bzw. nW2) der zugeordneten Aufheizphase vorgesehen ist.

**Claims**

1. Washing machine with a drive motor controlled in rotational speed for the laundry drum drivable at rotational speeds for washing and spinning and with a storage element for the storage of the rotational speed reference values for the rotational speed control equipment as well as with the operational phases "washing operation" and "rinsing operation", characterised thereby, that a matrix of rotational speed reference values is stored for the washing operation, which values contain three different washing operation rotational speed values (nB1, nB2, nB3 and nP1, nP2, nP3) each for at least two different categories of laundry (for example "cotton" and "easy-care").

2. Washing machine according to claim 1, characterised thereby, that one (nB1 or nP1) of the three rotational values for each category of laundry is provided as wetting rotational speed value during a wetting phase of the washing operation.

3. Washing machine according to claim 1 or 2, characterised thereby, that a second (nB2 or nP2) of the three rotational speed values for each category of laundry is provided as heating rotational speed value during a heating phase of the washing operation.

4. Washing machine according to one of the claims 1 to 3, characterised thereby, that a third (nB3 or nP3) of the three rotational speed values for each category of laundry is provided as active rotational speed value during an active washing phase of the washing operation.

5. Washing machine according to claim 3 or 4, characterised thereby, that the values of the heating rotational speed and the active rotational speed are equal in a washing operation for the category of laundry "wool".

6. Washing machine according to one of the preceding claims, characterised thereby, that the rotational speeds values of like kind are equal for different categories of laundry.

7. Washing machine according to one of the claims 1 to 5, characterised thereby, that the rotational speed values of like kind are different for different categories of laundry.

8. Washing machine according one of the claims 1 to 6, characterised thereby, that rotational speed values for the category of laundry "wool" differ from the rotational speed values of like kind for the other categories of laundry.

9. Washing machine according to one of the preceding claims, characterised thereby, that the rotational speed value (nB2 or nP2 or nW2) of the associated heating phase is provided for the rinsing operation of each category of laundry.

**Revendications**

4

1. Machine à laver le linge comportant un moteur d'entraînement à vitesse de rotation asservie du tambour à linge pouvant être entraîné à des vitesses de lavage et d'essorage, un élément de mémoire pour le stockage des vitesses de rotation de référence pour le dispositif d'asservissement de la vitesse ainsi que les phases de fonctionne-ment "lavage" et "rinçage", caractérisée en ce qu'une matrice de vitesses de rotation de référence est stockée pour le mode lavage, laquelle matrice comporte respectivement trois vitesses de rotation de lavage différentes (nB1, nB2, nB3 et nP1, nP2, nP3) pour au moins deux types de linge différents (par exemple "coton" et "fragile").

2. Machine à laver le linge selon la revendication 1, caractérisée en ce que l'une (nB1 ou nP1) des trois vitesses de rotation pour chaque type de linge est prévue comme vitesse de rotation de mouillage pendant une phase de mouillage du mode lavage.

3. Machine à laver le linge selon la revendication 1 ou 2, caractérisée en ce qu'une deuxième (nB2 ou nP2) des trois vitesses de rotation pour chaque type de linge est prévue comme vitesse de rotation de chauffage pendant une phase de chauffage du mode lavage.

4. Machine à laver le linge selon l'une des revendications 1 à 3, caractérisée en ce qu'une troisième (nB3 ou nP3) des trois vitesses de rotation pour chaque type de linge est prévue comme vitesse de rotation active pendant une phase de lavage actif du mode lavage.

5. Machine à laver le linge selon la revendication 3 ou 4, caractérisée en ce que dans un mode de lavage pour le type de linge "laine", les vitesses de rotation de chauffage et de lavage actif sont identiques.

6. Machine à laver le linge selon l'une des revendications précédentes, caractérisée en ce que les vitesses de rotation semblables pour différents types de linge sont égales.

7. Machine à laver le linge selon l'une des revendications 1 à 5, caractérisée en ce que les vitesses de rotation semblables pour différents types de linge sont distinctes.

8. Machine à laver le linge selon l'une des revendications 1 à 6, caractérisée en ce que les vitesses de rotation pour le type de linge "laine" sont différentes des vitesses de rotation semblables pour les autres types de linge.

9. Machine à laver le linge selon l'une des revendications précédentes, caractérisée en ce que la vitesse de rotation (nB2, nP2 ou nW2) de la phase de chauffage correspondante est prévue pour le mode de rinçage de chaque type de linge.